# EUROPÄISCHE PATENTSCHRIFT

(11) **EP 2 617 626 B1**
(45) Veröffentlichungstag und Bekanntmachung des Hinweises auf die Patenterteilung: **11.04.2018**
(21) Anmeldenummer: 13000194.4
(22) Anmeldetag: 15.01.2013
(51) Int. Cl.: B62D 5/065

(54) **Lenksystem**
Steering system
Système de direction

(30) Priorität: 19.01.2012 DE 102012000923
(43) Veröffentlichungstag der Anmeldung: 24.07.2013
(73) Patentinhaber: M-SYS Mobil Systems GmbH, 74243 Langenbeutingen (DE)
(72) Erfinder: Klugesherz, Klaus, 74626 Bretzfeld (DE)
(74) Vertreter: Laufhütte, Dieter

(56) Entgegenhaltungen:
- EP-A1- 1 544 078
- DE-A1-102006 017 040
- DE-A1-102007 045 896
- DE-A1-102007 053 263
- DE-A1-102008 047 545
- DE-U1- 29 920 122
- US-A1- 2005 061 574
- US-A1- 2006 254 850
- US-A1- 2007 043 490
- US-A1- 2010 152 971

## Beschreibung

Die vorliegende Erfindung betrifft ein Lenksystem mit mindestens einem Lenkzylinder zum Erzeugen von Lenkbewegungen und mindestens einer Hydraulikpumpe zur Bereitstellung von Druck zum Antrieb des Lenkzylinders.

Druckschriften DE102008047545 A1, DE102007053263 A1 (nächstliegender Stand der Technik), US2006254850 A1, DE29920122 U1, US2005061574 A1, DE102006017040 A1, US2007043490 A1, DE 102007045896 A1, US2010152971 A1, EP1544078 A1 zeigen jeweils Lenkkraftunterstützungssysteme zur Unterstützung einer Lenkbewegung eines Fahrers durch Einleiten eines zusätzlichen Momentes. Dabei stehen Hydraulikpumpe und Lenkzylinder so miteinander in Verbindung, dass die Bewegungen des Hydraulikzylinders zur Lenkkraftunterstützung direkt durch Ansteuerung der Hydraulikpumpe erzeugbar sind.

Bei dem erfindungsgemäßen Lenksystem handelt es sich dagegen um ein Hilfslenksystem oder Zusatzlenksystem, welches zur Lenkung einer hinteren Achse eingesetzt wird.

Bei Hilfslenksystemen von Nutzfahrzeugen setzen sich aufgrund höherer Flexibilität und Funktionalität als Alternative zu rein mechanisch oder rein hydraulisch arbeitenden Lösungen verstärkt elektronische Systeme durch. Als Stellglied wird meist auf die bewährte Technik robuster Hydraulikzylinder zum Verstellen der Achsen zurückgegriffen, weshalb man in diesem Fall von einem elektronisch-hydraulischen Lenksystem spricht.

Diese elektronisch-hydraulischen Systeme werden derzeit meist von Hydraulikpumpen mit hydraulischer Energie für die Stellbewegung versorgt, welche über den Verbrennungsmotor des Fahrzeugs angetrieben werden. Der Anbau einer Pumpe an den Verbrennungsmotor stellt eine nicht unerhebliche Einschränkung dar. Der dafür benötigte Nebenabtrieb am Motor steht dann nicht mehr für andere Systeme zur Verfügung. Ein Antrieb über Keilriemen ist bei den beengten Verhältnissen moderner Motoren komplex. Gelegentlich erfolgt daher die Energieversorgung elektronisch-hydraulischer Lenksysteme über einen Pufferspeicher, der mit einer Elektro-Hydraulikpumpe regeneriert wird.

Bei bekannten Lenksystemen wird die Lenkbewegung über Proportionalventile als Drosselventile feinfühlig, jedoch mit hohem Energieverlust bewerkstelligt. Diese hohen Energieverluste fordern einen vergleichsweise hohen Energiebedarf. Gerade bei der Regenerierung der Speicher durch eine Elektro-Hydraulikpumpe stellt dies ein unmittelbares technisches Problem dar, da die Pumpe dadurch eine hohe Leistung erbringen muss. Für das in den Fahrzeugen vorhandene Bordnetz stellt eine solche Leistung ein Problem dar.

Eine Technik aus Flurförderzeugen, mit einer konventionellen, stetig laufenden Elektro-Hydraulikpumpe die Ventiltechnik mit Energie zu versorgen, ist für Nutzfahrzeuge in der Regel auch nicht sinnvoll, da in der überwiegenden Betriebszeit eines Nutzfahrzeugs keine Stellbewegung an der Hilfslenkanlage vorgenommen wird.

Auch bei Lenksystemen für Fahrzeuganhänger besteht eine zunehmende Nachfrage nach elektronisch-hydraulischen Lenksystemen als Alternative zu rein mechanisch oder rein hydraulisch arbeitenden Lösungen. Auch hier liegt der Grund in der höheren Flexibilität, Funktionalität und konstruktiven Freiheit. Bei Anhängern scheidet derzeit eine Versorgung mit hydraulischer Stellenergie durch den Verbrennungsmotor des Zugfahrzeugs jedoch aus. Es steht derzeit keine standardisierte Schnittstelle an den Zugfahrzeugen zur Verfügung, landwirtschaftliche Traktoren einmal ausgenommen.

Es bleibt also die Versorgung des Lenksystems durch eine Elektro-Hydraulikpumpe. Die standardisierte elektrische Schnittstelle zwischen Zugfahrzeug und Anhänger erlaubt jedoch nur die Übertragung einer deutlich begrenzten Leistung. Es besteht damit auch im Bereich der Anhänger ein erhöhter Anspruch an die Energieeffizienz des Lenksystems.

Aufgabe der vorliegenden Erfindung ist es damit, ein Lenksystem mit einer verbesserten Energieeffizienz zur Verfügung zu stellen. Vorteilhafterweise ist dieses zudem flexibel einsetzbar und stellt nur geringe Anforderungen an den Bauraum.

Diese Aufgabe wird erfindungsgemäß durch ein Lenksystem gemäß Anspruch 1 gelöst.

Das erfindungsgemäße Lenksystem umfasst mindestens einen Lenkzylinder zum Erzeugen von Lenkbewegungen und mindestens eine Hydraulikpumpe zur Bereitstellung von Druck zum Antrieb des Lenkzylinders. Bei dem Lenksystem handelt es sich um ein Hilfslenksystem oder Zusatzlenksystem, welches zur aktiven Lenkung einer hinteren Achse eingesetzt wird, welche mit der Hauptachse eines Fahrzeugs mitgelenkt wird. Dabei erfolgt die Ansteuerung der Hilfslenkung elektronisch über eine Lenkungssteuerung. Hierfür ist ein Lenkgeber vorgesehen, welcher die Lenkbewegung der Hauptachse aufnimmt, wobei auf Grundlage der Signale des Lenkgebers ein Soll-Lenkwert für die Hilfsachse berechnet und durch Ansteuerung der Hydraulikpumpe angesteuert wird. Erfindungsgemäß stehen die Hydraulikpumpe und der Lenkzylinder dabei so miteinander in Verbindung, dass die Lenkbewegung direkt durch Ansteuerung der Hydraulikpumpe erzeugbar sind. Anders als im Stand der Technik werden die Lenkbewegungen damit nicht über ein Drosselventil angesteuert, sondern direkt durch die Hydraulikpumpe. Damit entfallen die Verlustleistungen, welche bei der aus dem Stand der Technik bekannten Drosselventilsteuerung für hydraulische Antriebe auftraten. Damit wird der Energiebedarf und die erforderliche Antriebsleistung für das erfindungsgemäße Lenksystem gesenkt. Die Lenkgeschwindigkeit wird dabei vorteilhafterweise über die Förderrate der Hydraulikpumpe eingestellt.

Bevorzugt wird die Hilfs- bzw. Zusatzlenkung dabei so angesteuert, dass eine Mitlenkung mit der Hauptlenkachse nur bei niedrigen Fahrgeschwindigkeiten erfolgt. Häufig kommt die Hilfs- oder Zusatzlenkung dabei bei Fahrzeugen mit zwei oder mehr hinteren Achsen zum Einsatz. Bei einigen Fahrzeugkonstruktionen wird auch eine einzelne Hinterachse durch eine solche Hilfs- oder Zusatzlenkung gelenkt. Dabei kann es sich bei der über die Hilfs- oder Zusatzlenkung gelenkten Achse insbesondere um eine Hinterachse eines Nutzfahrzeuges, eines Buses oder um eine Achse eines Anhängers handeln.

In vorteilhafter Weise wird die Hydraulikpumpe erfindungsgemäß von einem Elektromotor angetrieben. Dies ermöglicht eine feinfühlige Ansteuerung der Hydraulikpumpe durch Ansteuerung des Elektromotors, welcher die Hydraulikpumpe antreibt. Die Ansteuerung der Lenkbewegung kann damit direkt durch die Ansteuerung der Drehzahl und/oder Drehrichtung des Elektromotors erfolgen. Der Einsatz eines Elektromotors zum Antrieb der Hydraulikpumpe erlaubt zudem einen flexiblen Einbau der Lenkung ohne einen Abtrieb am Verbrennungsmotor.

Vorteilhafterweise kommt dabei erfindungsgemäß ein bürstenloser Elektromotor zum Einsatz. Diese Motoren sind nahezu verschleißfrei und erfüllen somit die Anforderungen an eine hohe Standzeit im Fahrzeugbau. Bei entsprechender Ausführung oder bei geringeren Standzeitanforderungen können auch bürstenbehaftete Gleichstrommotore eingesetzt werden.

Weiterhin kann der Elektromotor mittels eines Drehzahlreglers über eine Gleichspannungsversorgung angesteuert werden. Vorteilhafterweise kommt als Drehzahlregler dabei ein Inverter zum Einsatz, welcher den als Drehstrom-Elektromotor ausgeführten Elektromotor ansteuert. Vorteilhafterweise sind bei Bruschless-DC-Motoren dafür geeignete Elektronikregler vorgesehen

Vorteilhafterweise erfolgt die Spannungsversorgung für das Lenksystem über das Bordnetz des Fahrzeugs. Weiterhin vorteilhafterweise wird eine Gleichspannungsversorgung zwischen 10 Volt und 50 Volt eingesetzt, insbesondere in Höhe von 12 Volt, 24, Volt, 42 Volt oder 48 Volt nominal, d. h. eine standardmäßige Bordspannungsversorgungen von Fahrzeugen, insbesondere von Nutzfahrzeugen.

Bevorzugt generiert die Lenkungssteuerung auf Grundlage der Signale des Lenkgebers Lenksignale zur Erzeugung von Lenkbewegungen, über welche die Förderrate und/oder Förderrichtung der Hydraulikpumpe angesteuert wird. Beispielsweise kann der Lenkgeber den Lenkeinschlag der Hauptachse messen, wobei die Lenkbewegung für die Hilfsachse auf Grundlage des Lenkwinkels der Hauptachse bestimmt werden.

Vorteilhafterweise steuert die Lenkungssteuerung dabei die Drehzahl und/oder Drehrichtung eines Elektromotors an, welcher die Hydraulikpumpe antreibt, um so die Förderrate und/oder Förderrichtung der Hydraulikpumpe anzusteuern. Als Hydraulikpumpe kann dabei insbesondere eine Pumpe mit konstantem Schluckvolumen eingesetzt werden. Aus Kostengründen besonders bevorzugt kommt eine Zahnradpumpe zum Einsatz. Auch andere Pumpenausführungen wie beispielsweise eine Kolbenpumpe sind bei entsprechenden Anforderungen zu bevorzugen.

In einer bevorzugten Ausführung der vorliegenden Erfindung wird als Hydraulikpumpe des Lenksystems eine bidirektionale Pumpe mit einer ersten und einer zweiten Förderrichtung eingesetzt, wobei eine Lenkbewegung in eine erste Richtung durch Betreiben der Hydraulikpumpe in der ersten Förderrichtung und eine Lenkbewegung in eine zweite Richtung durch Betreiben der Hydraulikpumpe in der zweiten Förderrichtung erzeugbar ist. Die Richtung der Lenkbewegung wird damit erfindungsgemäß über die Förderrichtung der Hydraulikpumpe bestimmt.

Die Lenkgeschwindigkeit wird damit vorteilhafterweise über die Förderrate der Hydraulikpumpe angesteuert, während die Richtung der Lenkbewegung über die Förderrichtung der Hydraulikpumpe bestimmt wird.

In vorteilhafter Weise sind bei dieser Ausführung eine erste und eine zweite Druckkammer vorgesehen, durch deren jeweilige Beaufschlagung mit Druck eine Lenkbewegung in die erste bzw. zweite Richtung erzeugbar ist, wobei ein erster Druckanschluss der Hydraulikpumpe mit der ersten Druckkammer und ein zweiter Druckanschluss der Hydraulikpumpe mit der zweiten Druckkammer in Verbindung steht. Insbesondere handelt es sich dabei bei den beiden Druckkammern um Druckkammern eines Hydraulikzylinders, welcher die Lenkbewegung in beide Richtungen erzeugt.

Die vorliegende Erfindung kann dabei in einer ersten Alternative bei Lenksystemen zum Einsatz kommen, bei ein Gleichgangzylinder als Lenkzylinder eingesetzt wird. Bei solchen Gleichgangzylindern haben beide Zylinderkammern den gleichen Verdrängungsquerschnitt, wobei die Zylinderstange auf beiden Seiten aus dem Zylinder herausgeführt ist. Dabei stehen beide Enden der Zylinderstange jeweils mit einem Rad in Verbindung und lenken dieses.

Bei einem Gleichgangzylinder können die beiden Druckanschlüsse der Hydraulikpumpe direkt mit den beiden Druckkammern des Hydraulikzylinders in Verbindung stehen. Insbesondere ist dabei eine Zwischenschaltung von Ventilen nicht notwendig. Vielmehr kann durch den gleichen Verdrängungsquerschnitt der beiden Kammern des Gleichgangzylinders die Hydraulikflüssigkeit direkt von einer Kammer in die andere Kammer gepumpt werden.

Die vorliegende Erfindung kann in einer zweiten Alternative auch bei einem Lenksystem zum Einsatz kommen, bei welchem ein Differentialzylinder als Lenkzylinder eingesetzt wird. Bei solchen Differentialzylindern haben die beiden Zylinderkammern einen unterschiedlichen Verdrängungsquerschnitt, wobei die Zylinderstange nur auf einer Seite aus dem Zylinder herausgeführt ist. Die beiden Räder einer Achse sind dann üblicherweise über eine Spurstange miteinander gekoppelt.

In vorteilhafter Weise stehen beim Einsatz eines Differentialzylinders die beiden Druckanschlüsse der Hydraulikpumpe über ein Ventilsystem mit den beiden Druckkammern des Hydraulikzylinders in Verbindung, welches auf der jeweiligen Niederdruckseite eine Verbindung zu einem Hydraulikspeicher herstellt. So kann bspw. zum Befüllen der Kammer mit dem größeren Verdrängungsquerschnitt Hydraulikfluid aus dem Hydraulikspeicher nachgesaugt werden. Umgekehrt kann beim Entleeren der Kammer mit dem größeren Verdrängungsquerschnitt Hydraulikfluid zum Hydraulikspeicher abfließen. Vorteilhafterweise ist das Ventilsystem dabei hydraulisch angesteuert. Vorteilhafterweise sind dabei zwischen Hydraulikpumpe und Zylinder nur Schaltventile oder Logikventile vorgesehen, nicht aber Drosselventile.

In einer weiteren alternativen Ausführung des erfindungsgemäßen Lenksystems können alternativ zur oben geschilderten Ausführung mit einer einzigen, bidirektionalen Pumpe eine erste und eine zweite Hydraulikpumpe eingesetzt werden, wobei eine Lenkbewegung in eine erste Richtung durch Betreiben der ersten Hydraulikpumpe und eine Lenkbewegung in eine zweite Richtung durch Betreiben der zweiten Hydraulikpumpe erzeugbar ist. Ein solches System ist sowohl mit einem Gleichgangzylinder als auch mit einem Differentialzylinder einsetzbar. Gerade bei Kombination mit einem Differentialzylinder hat die Verwendung zweier Hydraulikpumpen dabei den Vorteil, dass zum Ausgleich der unterschiedlichen Verdrängungsquerschnitte der Kammern kein Ventilsystem notwendig ist. In vorteilhafter Weise werden die beiden Hydraulikpumpen dabei jeweils über Elektromotoren angetrieben, wie dies oben bereits dargestellt wurde.

Gemäß einem ersten Aspekt der Erfindung ist es somit möglich, den Lenkzylinder lediglich durch Änderung der Pumpendrehzahl und/oder der Pumpendrehrichtung zu verstellen. Dies erfolgt vorteilhafterweise durch eine entsprechende Verstellung der Motordrehzahl und/oder Motordrehrichtung eines Elektro-Motors, welcher die Hydraulikpumpe antreibt. Damit entfallen unnötige Verlustleistungen einer Drosselventilsteuerung und die erforderliche Antriebsleistung wird reduziert.

Ein solches Lenksystem kann dabei insbesondere in einem Nutzfahrzeug, einem Bus oder einem Anhänger eingesetzt werden.

Die vorliegende Erfindung betrifft ein Lenksystem mit mindestens einem Lenkzylinder zum Erzeugen von Lenkbewegungen, mindestens eine Hydraulikpumpe zur Bereitstellung von Druck zum Antrieb des Lenkzylinders und einer Lenkungssteuerung, welche auf Grundlage der Signale eines Lenkgebers Lenksteuersignale generiert.

Bei bekannten Lenksystemen dieser Art werden die Lenksteuersignale üblicherweise durch einen Regler generiert, welcher einen anhand des Lenkgebers ermittelten Lenk-Sollwert mit einem Lenk-Ist-Wert vergleicht und den Lenkzylinder entsprechend ansteuert, um die Differenz zwischen Ist- und Sollwert auf 0 zu setzen.

Die üblicherweise sehr feinfühligen Lenkbewegungen und genaue Positionsregelung führt dabei bei einem solchen klassischen Regleransatz zu einem Feindosieren der Ölmengen und damit einem langsamen Loslaufenden und Anhalten der Hydraulikpumpe. Hierdurch kann eine ausreichende Schmierung der Lagerstellen jedoch nur durch teure Schmierkonzepte gewährleistet werden.

Gemäß einer bevorzugten Ausgestaltung ist es daher Aufgabe der vorliegenden Erfindung, ein erfindungsgemäßes Lenksystem zur Verfügung zu stellen, welches eine ausreichende Schmierung der Pumpe auch bei kostengünstigen Hydraulikpumpen gewährleistet.

Das erfindungsgemäße Lenksystem sieht hierfür bevorzugt vor, dass die Lenkungssteuerung Lenkbewegungen unterhalb eines Mindestlenkbewegungswinkels und/oder unterhalb einer Mindestlenkbewegungsgeschwindigkeit unterdrückt. Vorteilhafterweise wird hierdurch der Betrieb der Hydraulikpumpe mit Drehzahlen, welche unterhalb einer Mindestdrehzahl liegen, reduziert. Anders als beim klassischen Regleransatz bewirkt die Lenkungssteuerung damit ein schnelles Loslaufen und ein schnelles Anhalten der Hydraulikpumpe, so dass für eine ausreichende Schmierung der Lagerstellen gesorgt ist.

Da es sich bei dem erfindungsgemäßen Lenksystem um eine Hilfslenkanlage handelt, können gewisse Lenkfehler toleriert werden. Hierdurch kann, soweit nötig, auf feinfühlige Lenkbewegungen verzichtet werden, um für eine ausreichende Schmierung zu sorgen.

Dabei kann vorgesehen sein, dass die Lenkungssteuerung erst dann eine Lenkbewegung einleitet, wenn die Abweichung zwischen einem Lenk-Sollwert und einem Lenk-Ist-Wert einen bestimmten Wert überschreitet oder einen Trend für eine weitere Veränderung des Lenk-Sollwerts erkannt wird. Insbesondere kann der LenkSollwert dabei auf Grundlage eines Signals des Lenkgebers berechnet werden. Der Lenk-Ist-Wert wird vorteilhafterweise über Sensoren an der gelenkten Achse und/oder am Lenkzylinder bestimmt.

Ebenso kann vorgesehen sein, dass die Lenkungssteuerung zu Beginn eines Lenkvorgangs bis zum Überschreiten einer Mindestlenkgeschwindigkeit so schnell wie möglich beschleunigt. Hierdurch kann der kritische Zustand des Betriebs mit einer zu geringen Drehzahl möglichst schnell überfahren werden, und der Hauptteil der Stellbewegung mit einer höheren Drehzahl ausgeführt werden.

Weiterhin kann vorgesehen sein, dass die Lenkungssteuerung eine Lenkbewegung im Wege einer Vorsteuerung, welche das Auslaufverhalten des Antriebs berücksichtigt, punktgenau stoppt. Anders als bei einem klassischen Regleransatz wird damit die Lenkbewegung zum Ende hin nicht feinfühlig heruntergeregelt, sondern schnell gestoppt.

Weiterhin kann vorgesehen sein, dass ab dem Unterschreiten einer Mindestlenkgeschwindigkeit die Lenkungssteuerung so schnell wie möglich abbremst. So kann auch zum Ende einer Stellbewegung hin der kritische Zustand des Betriebs mit kleiner Drehzahl so schnell wie möglich überfahren werden.

Die vorliegende Erfindung umfasst weiterhin Verfahren zum Betrieb eines Lenksystems, wie es oben dargestellt wurde.

Insbesondere erfolgt dabei bei dem ersten erfindungsgemäßen Verfahren die Erzeugung der Lenkbewegung direkt durch Ansteuerung der Hydraulikpumpe, wobei dies vorteilhafterweise durch Ansteuerung eines Elektromotors, welcher die Hydraulikpumpe antreibt, erfolgt. In vorteilhafter Weise erfolgt das Verfahren dabei weiterhin so, wie dies bereits oben dargestellt wurde.

Gemäß einem zweiten erfindungsgemäßen Verfahren werden Lenkbewegungen unterhalb eines Mindestlenkbewegungswinkels und/oder unterhalb einer Mindestlenkbewegungsgeschwindigkeit unterdrückt. Vorteilhafterweise erfolgt auch dieses Verfahren so, wie dies oben bereits dargestellt wurde.

Besonders bevorzugt wird dabei das zweite Verfahren in Kombination mit dem ersten Verfahren eingesetzt.

Die vorliegende Erfindung umfasst weiterhin ein Fahrzeug mit einem Lenksystem, wie sie oben dargestellt wurden. Dabei wird das Lenksystem als Hilfslenkung eingesetzt, und zwar zur Lenkung einer hinteren Achse. Besonders bevorzugt kommt die vorliegende Erfindung dabei bei Nutzfahrzeugen, Bussen oder Anhängern zum Einsatz.

Durch die geringen Energieverluste der erfindungsgemäßen Lenkung eignet sich diese Technologie dabei insbesondere für den Einsatz in Anhängern. Jedoch auch für Solofahrzeuge ist die vorliegende Erfindung von Interesse, da Energieverluste unmittelbar mit einem Kraftstoffverbrauch einhergehen. Das Einsparungspotential gegenüber verbrennungsmotorgetriebenen Pumpen mit Drosselventiltechnik liegt dabei im Bereich von 1 kW.

Weiterhin heben Bauraumvorteile sowie ein deutlich einfacherer Anbau durch Verzicht auf einen Abtrieb vom Verbrennungsmotor sowie die Möglichkeit einer hierdurch gegebenen Standardisierung die vorliegende Erfindung von verbrennungsmotorgetriebenen Pumpen mit Drosselventiltechnik ab.

Die vorliegende Erfindung wird nun anhand von Ausführungsbeispielen sowie Zeichnungen näher dargestellt. Dabei zeigen:
- Figur 1:: ein erstes Ausführungsbeispiel der vorliegenden Erfindung mit einem Gleichgangzylinder,
- Figur 2a:: ein zweites Ausführungsbeispiel der vorliegenden Erfindung mit einem Differentialzylinder und einer ersten Variante einer Ventilsteuerung,
- Figur 2b:: das zweite Ausführungsbeispiel mit einer zweiten Variante der Ventilsteuerung und
- Figur 2c:: das zweite Ausführungsbeispiel mit einer dritten Variante der Ventilsteuerung.

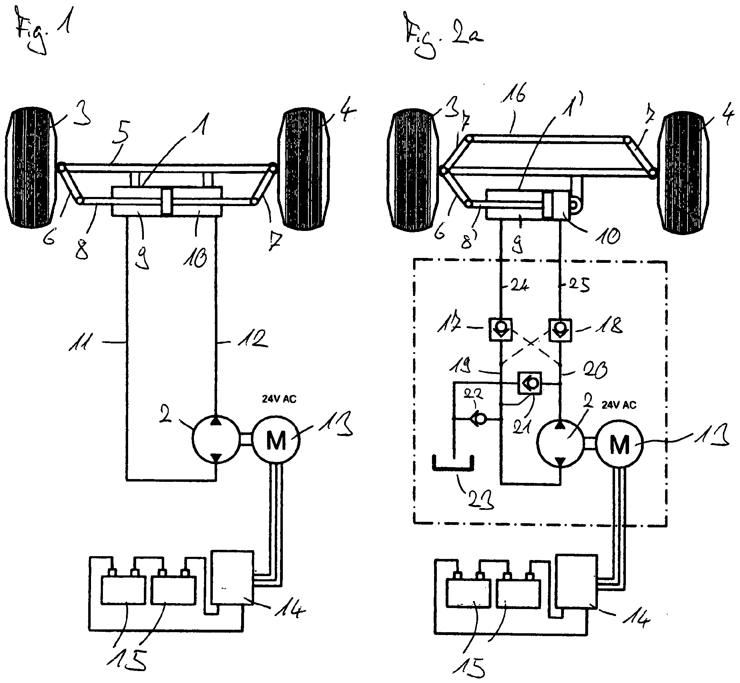

Die Figuren 1 und 2a bis 2c zeigen jeweils Ausführungsbeispiele eines erfindungsgemäßen Lenksystems, bei welchem die Räder 3 und 4 der Achse 5 über einen Lenkzylinder 1 bzw. 1' lenkbar sind.

Die Lenkbewegungen des Lenkzylinders 1 bzw. 1' werden dabei jeweils direkt durch Ansteuerung einer Hydraulikpumpe 2 erzeugt, welche mit dem Hydraulikzylinder 1 bzw. 1' in Verbindung steht.

Im Ausführungsbeispiel handelt es sich bei dem Lenksystem dabei um eine Hilfslenkung, wobei eine hintere Achse eines Fahrzeugs mit der Hauptachse mitgelenkt wird. In der Regel erfolgt eine aktive Mitlenkung der hinteren Achse dabei nur bei niedrigen Fahrgeschwindigkeiten, beispielsweise um die Rangierfähigkeit des Fahrzeugs zu erhöhen. Hierbei handelt es sich um eine verbreitete Konstruktion bei Nutzfahrzeugen und Bussen mit zwei oder mehr hinteren Achsen oder bei Fahrzeuganhängern. Aber es werden gelegentlich auch Fahrzeuge mit einer Hinterachse entsprechend ausgeführt. Die Ansteuerung der Hilfslenkung erfolgt dabei elektronisch, wobei ein Lenkgeber vorgesehen ist, welcher die Lenkbewegung der Hauptachse aufnimmt. Auf Grundlage der Signale des Lenkgebers wird dann ein Soll-Lenkwert für die Hilfsachse berechnet und erfindungsgemäß durch Ansteuerung der Hydraulikpumpe 2 angesteuert.

Die Hydraulikpumpe wird von einem Elektromotor 13 angetrieben, so dass die Ansteuerung der Pumprate bzw. Pumprichtung durch eine entsprechende Ansteuerung des Elektromotors 13 erfolgt. Hierzu ist ein Inverter 14 vorgesehen, welcher die Spannung des Gleichspannungsnetzes in Wechselspannungsimpulse umwandelt und damit die Drehzahl und Drehrichtung des Niederspannungs-Wechselstrommotors 13 ansteuert. Im Ausführungsbeispiel wird dabei eine Gleichspannung von 24 Volt eingesetzt, d. h. es wird die übliche Bordspannung eines Nutzfahrzeugs oder Busses eingesetzt, welche beispielsweise durch zwei Batterien 15 bereitgestellt wird. Als Elektromotor kommt dabei vorteilhafterweise ein bürstenloser, nahezu verschleißfreier Motor zum Einsatz. Aber auch bürstenbehaftete Motore haben bei entsprechenden Randbedingungen einen Vorteil bei einem Lenksystem entsprechend der Erfindung. Bei der Hydraulikpumpe 2 handelt es sich vorteilhafterweise um eine Pumpe mit konstantem Schluckvolumen, beispielsweise um eine Zahnradpumpe oder eine Kolbenpumpe.

Dabei ist die Hydraulikpumpe 2 in den Ausführungsbeispielen als eine bidirektionale Pumpe ausgeführt, welche somit im Reversierbetrieb betrieben werden kann und in beide Richtungen Hydraulikfluid fördern kann. Hierdurch kann die Hydraulikpumpe Hydraulikfluid in beide Kammern 9 und 10 des Hydraulikzylinders 1 bzw. 1' pumpen und damit durch eine entsprechende Umkehrung der Förderrichtung Lenkbewegung in beide Lenkrichtungen generieren. Die Lenkrichtung wird damit durch die Motordrehrichtung und damit die entsprechende Pumpendrehrichtung eingestellt, die Lenkgeschwindigkeit durch die Motordrehzahl und damit die Pumpendrehzahl.

Erfindungsgemäß werden damit keine Drosselventile mehr zwischen Pumpe 2 und Hydraulikzylinder 1 bzw. 1' eingesetzt, wie dies im Stand der Technik der Fall war. Vielmehr wird der Lenkzylinder lediglich durch Änderung der Motordrehzahl und/oder Drehrichtung und damit der Pumpendrehzahl und/oder Drehrichtung verstellt. Damit entfallen unnötige Verlustleistungen einer Drosselventilsteuerung und die erforderliche Antriebsleistung wird reduziert. Das erfindungsgemäße Lenksystem kommt dabei insbesondere bei einem Nutzfahrzeug, einem Bus oder einem Anhänger zum Einsatz.

In Figur 1 kommt dabei als Lenkzylinder ein Gleichlaufzylinder 1 zum Einsatz, bei welchem die beiden Zylinderkammern 9 und 10 den gleichen Verdrängungsquerschnitt haben. Die Zylinderstange 8 ist dabei auf beiden Seiten aus dem Zylinder herausgeführt und ist gelenkig mit Lenkhebeln 6 und 7 zur Lenkung des Rades 3 bzw. 4 verbunden. Hierdurch können die beiden Anschlüsse der Pumpe 2 über die Hydraulikleitungen 11 und 12 ohne die Zwischenschaltung von Ventilen mit den Hydraulikkammern 9 und 10 verbunden werden, wobei die Pumpe 2 bei einer Lenkbewegung das Öl von der einen Zylinderkammer in die andere Zylinderkammer pumpt. Zum Ausgleich von Leckölverlusten können die beiden Hydraulikleitungen 11 und 12 dabei gegebenenfalls noch über Rückschlagventile mit einem nicht dargestellten Hydraulikspeicher verbunden werden.

Die vorliegende Erfindung kann jedoch auch bei einem Lenksystem mit Differentialzylinder eingesetzt werden, wie dies in Figur 2a dargestellt ist. Bei diesem Lenksystem sind die beiden Räder 3 und 4 durch eine Spurstange 16 fester Länge verbunden, welche jeweils an Lenkhebeln 7 angreift. Die Zylinderstange 8' des Hydraulikzylinders 1' steht dagegen im Ausführungsbeispiel über einen Lenkhebel 6 mit nur einem der beiden Räder direkt in Verbindung.

Die Zylinderkammern 9 und 10 des Differentialzylinders 1' haben dabei unterschiedliche Verdrängungsquerschnitte, so dass das Hydrauliköl nicht einfach von der einen Kammer in die andere Kammer gepumpt werden kann. Die direkte Ansteuerung der Lenkbewegung über die Drehzahl bzw. Drehrichtung der Pumpe 2 wird daher durch ein Ventilsystem ermöglicht, welches zwischen Pumpe und Hydraulikzylinder geschaltet ist. Bei den Ventilen handelt es sich jedoch nicht um Drosselventile, sondern lediglich um Schaltventile oder Logikventile, welche jeweils die Niederdruckseite mit dem Tank 23, d. h. mit einem Hydraulikspeicher verbinden. So kann überschüssiges Hydraulikfluid abfließen bzw. fehlendes Hydraulikfluid nachgesogen werden.

In Figur 2a ist dabei eine erste Variante einer solchen Ventilsteuerung gezeigt. Dabei sind Rückschlagventile 17 und 18 in den Leitungen 24 und 25 zu den beiden Zylinderkammern 9 und 10 angeordnet, welche über Steuerleitungen, die über Kreuz mit den Anschlüssen der Hydraulikpumpe 2 verbunden sind, auch in Gegenrichtung geöffnet werden können. Dies ermöglicht ein Abfließen von Hydraulikfluid aus der jeweils nicht mit Druck beaufschlagten Hydraulikkammer. Weiterhin ist auf der zur Zylinderkammer 9 mit dem geringeren Verdrängungsquerschnitt führenden Seite 19 ein Rückschlagventil 22 zum Tank 23 angeordnet, über welches auf dieser Seite Hydraulikfluid nachgesogen werden kann, wenn die Hydraulikpumpe Hydraulikfluid in die Kammer 10 pumpt. Weiterhin ist in der zur Zylinderkammer 10 mit dem größeren Verdrängungsquerschnitt führenden Leitungen 20 ein Rückschlagventil 21 zum Tank vorgesehen, welches über ein Steuerleitung vom anderen Ausgang 19 der Hydraulikpumpe 2 auch in Gegenrichtung geöffnet werden kann. Hierdurch kann überschüssiges Hydraulikfluid aus der Zylinderkammer 10 abfließen, wenn die Zylinderkammer 9 mit Hydraulikfluid befüllt wird.

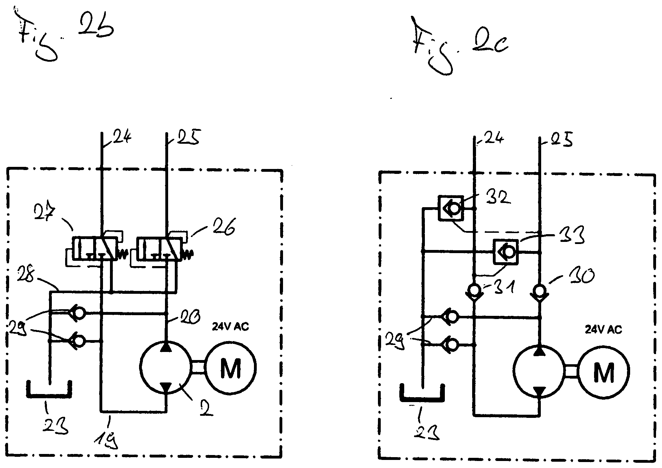

In den Figuren 2b und 2c sind nun zwei weitere Varianten für das in Figur 2a gestrichelt umrahmte System und insbesondere für die Ventilsteuerung gezeigt. Bei der in Figur 2b gezeigten Variante sind dabei in den Hydraulikleitungen 24 und 25 zu den beiden Zylinderkammern 9 und 10 jeweils 3-Wege-Ventile 26 und 27 angeordnet, welche über Steuerleitungen von den Ausgängen 20 und 19 der Pumpe 2 angesteuert werden. Dabei wird auf der Hochdruckseite jeweils eine Verbindung zwischen Hydraulikpumpe und Zylinderkammer hergestellt, während auf der Niederdruckseite die Zylinderkammer über die Leitung 28 mit dem Tank 23 verbunden wird. Das Nachsaugen von Hydraulikflüssigkeit auf der Niederdruckseite der Pumpe 2 erfolgt dabei jeweils über Rückschlagventile 29 aus dem Tank 23.

Bei der in Figur 2c gezeigten dritten Variante stehen die beiden Zylinderkammern des Hydraulikzylinders jeweils über einfache Rückschlagsventile 30 bzw. 31 mit den Ausgängen der Pumpe 2 in Verbindung. Der Abfluss von Hydraulikfluid aus den Kammern folgt dabei jeweils über Rückschlagventile 32 und 33, welche über Steuerleitungen in Gegenrichtung aufgesteuert werden können. Das Nachsaugen von Hydraulikfluid auf der Niederdruckseite der Pumpe erfolgt wiederum über Rückschlagventile 29 aus dem Tank 23.

Die vorliegende Erfindung kann auch bei einem Lenksystem mit 2 oder mehr Differentialzylindern eingesetzt werden, welche in Gleichgangschaltung hydraulisch verschaltet wurden. Der Volumenunterschied zwischen der einen Lenkrichtung und der anderen Lenkrichtung ist dadurch nicht mehr so groß wie bei einem einzelnen Differentialzylinder. Aufgrund von kinematischen Gegebenheiten und Fertigungstoleranzen kann jedoch nicht von zwei gleichen Verdrängungsvolumen bei den beiden Lenkrichtungen ausgegangen werden. Eine Ventiltechnik wie beispielsweise in den Figuren 2a, 2b oder 2c gezeigt ist daher dennoch notwendig.

Alternativ zu dem in den Figuren 1 und 2 dargestellten Ausführungsbeispiel, bei welchem eine einzige Hydraulikpumpe 2 eingesetzt wird und die Richtung der Lenkbewegung über die Drehrichtung der Hydraulikpumpe bestimmt wird, können auch zwei getrennte Hydraulikpumpen eingesetzt werden, welche jeweils mit einer der beiden Hydraulikkammern 9 bzw. 10 in Verbindung stehen und Hydraulikfluid vom Tank in diese Kammern pumpen. Werden dabei jeweils Hydraulikpumpen mit zwei Förderrichtungen eingesetzt, so kann auch bei Differentiälzylindern komplett auf Ventile verzichtet werden. Der Einsatz von zwei Hydraulikpumpen hat weiterhin den Vorteil, dass der Druck in beiden Hydraulikkammern separat eingestellt werden kann.

Unabhängig von der konkreten Ausgestaltung der Lenkanlage dürfen preiswerte Zahnradpumpen nur selten bei kleinen Drehzahlen betrieben werden. Eine ausreichende Schmierung der Lagerstellen ist ansonsten nicht gewährleistet. Feinfühlige Lenkbewegungen und eine genaue Positionsregelung erfordern jedoch bei einem klassischen Regleransatz ein feines Dosieren von Ölmengen und somit ein langsames Loslaufen und Anhalten der Pumpe.

Daher ist es für die vorliegende Erfindung von besonderem Vorteil, wenn eine spezielle Auslegung des Reglers softwaremäßig den Betrieb der Hydraulikpumpe in für die Pumpe ungeeigneten Betriebspunkten reduziert und dadurch die Standzeit der Pumpe erhöht. Klassische Regler nehmen darauf keine Rücksicht.

Gemäß der vorliegenden Erfindung werden durch den Regler dagegen gewisse Lenkfehler toleriert. Der Regler wird dabei so ausgelegt, dass er zunächst Lenkabweichungen toleriert, ohne eine Stellbewegung auszuführen. Erreicht die Abweichung einen bestimmten Wert oder lässt sich ein Trend für eine stetige Erhöhung der Abweichung erkennen (z. B. Einfahren in eine Kurve), so beginnt der Regler mit einer Stellbewegung. Bei der Stellbewegung wird dann jedoch der kritische Zustand eines Betriebs mit kleiner Drehzahl möglichst schnell überfahren und die Stellbewegung mit einer höheren Drehzahl ausgeführt. Gleiches gilt für das Beenden der Stellbewegung. Hier wird zusätzlich das Auslaufen des Antriebs berücksichtigt, so dass das Stellglied punktgenau zum Stehen kommt.

Neben den Energieeinsparungen ermöglicht die erfindungsgemäße Lenkanlage auch Bauraumvorteile, eine Standardisierung der Komponenten sowie einen flexiblen Anbau bzw. eine flexible Nachrüstung. Hierdurch ergeben sich erhebliche Vorteile sowohl gegenüber verbrennungsmotorbetriebenen, als auch elektrisch betriebenen Pumpen mit Drosselventiltechnik.

## Patentansprüche

1. Lenksystem mit mindestens einem Lenkzylinder zum Erzeugen von Lenkbewegungen und mindestens einer Hydraulikpumpe zur Bereitstellung von Druck zum Antrieb des Lenkzylinders,
wobei Hydraulikpumpe und Lenkzylinder so miteinander in Verbindung stehen, dass die Lenkbewegungen direkt durch Ansteuerung der Hydraulikpumpe erzeugbar sind,
wobei es sich bei dem Lenksystem um ein Hilfslenksystem oder Zusatzlenksystem handelt, welches zur aktiven Lenkung einer hinteren Achse eingesetzt wird, welche mit der Hauptachse eines Fahrzeugs mitgelenkt wird, wobei die Ansteuerung der Hilfslenkung elektronisch über eine Lenkungssteuerung erfolgt und ein Lenkgeber vorgesehen ist, welcher die Lenkbewegung der Hauptachse aufnimmt, wobei auf Grundlage der Signale des Lenkgebers ein Soll-Lenkwert für die Hilfsachse berechnet und durch Ansteuerung der Hydraulikpumpe angesteuert wird.

2. Lenksystem nach Anspruch 1, wobei die Hydraulikpumpe von einem Elektromotor angetrieben wird, wobei es sich vorteilhafterweise um einen bürstenlosen oder einen bürstenbehafteten Elektromotor handelt und/oder der Elektromotor mittels eines Drehzahlreglers über eine Gleichspannungsversorgung angesteuert wird, wobei vorteilhafterweise eine Gleichspannungsversorgung zwischen 10 V und 50 V eingesetzt wird, insbesondere in Höhe von 12 V, 24 V, 42 V oder 48 V nominal.

3. Lenksystem nach Anspruch 1 oder 2, wobei die Lenkungssteuerung auf Grundlage der Signale des Lenkgebers Lenksignale zur Erzeugung von Lenkbewegungen generiert, über welche die Förderrate und/oder Förderrichtung der Hydraulikpumpe angesteuert wird, wobei die Lenkungssteuerung vorteilhafterweise die Drehzahl und/oder Drehrichtung eines Elektromotors ansteuert, welcher die Hydraulikpumpe antreibt.

4. Lenksystem nach einem der vorangegangenen Ansprüche, wobei es sich bei der Hydraulikpumpe um eine bidirektionale Pumpe mit einer ersten und einer zweiten Förderrichtung handelt, wobei eine Lenkbewegung in eine erste Richtung durch Betreiben der Hydraulikpumpe in der ersten Förderrichtung und eine Lenkbewegung in eine zweite Richtung durch Betreiben der Hydraulikpumpe in der zweiten Förderrichtung erzeugbar ist, wobei vorteilhafterweise eine erste und eine zweite Druckkammer vorgesehen sind, durch deren jeweilige Beaufschlagung mit Druck eine Lenkbewegung in die erste bzw. zweite Richtung erzeugbar ist, wobei ein erster Druckanschluss der Hydraulikpumpe mit der ersten Druckkammer und ein zweiter Druckanschluss der Hydraulikpumpe mit der zweiten Druckkammer in Verbindung steht.

5. Lenksystem nach einem der Ansprüche 1 bis 4, wobei es sich bei dem Hydraulikzylinder um einen Gleichgangzylinder handelt, und wobei vorteilhafterweise die beiden Druckanschlüsse der Hydraulikpumpe direkt mit den beiden Druckkammern des Hydraulikzylinders in Verbindung stehen, insbesondere ohne eine Zwischenschaltung von Ventilen.

6. Lenksystem nach einem der Ansprüche 1 bis 4, wobei es sich bei dem Hydraulikzylinder um einen Differentialzylinder handelt, und wobei vorteilhafterweise die beiden Druckanschlüsse der Hydraulikpumpe über ein Ventilsystem mit den beiden Druckkammern des Hydraulikzylinders in Verbindung stehen, welches auf der jeweiligen Niederdruckseite eine Verbindung zu einem Hydraulikspeicher herstellt.

7. Lenksystem nach einem der Ansprüche 1 bis 3 mit einer ersten und einer zweiten Hydraulikpumpe, wobei eine Lenkbewegung in eine erste Richtung durch Betreiben der ersten Hydraulikpumpe und eine Lenkbewegung in eine zweite Richtung durch Betreiben der zweiten Hydraulikpumpe erzeugbar ist.

8. Lenksystem nach einem der vorangegangenen Ansprüche, wobei die Lenkungssteuerung Lenkbewegungen unterhalb eines Mindestlenkbewegungswinkels und/oder unterhalb einer Mindestlenkbewegungsgeschwindigkeit unterdrückt, wodurch die Lenkungssteuerung vorteilhafterweise den Betrieb der Hydraulikpumpe mit Drehzahlen, welche unterhalb einer Mindestdrehzahl liegen, reduziert.

9. Lenksystem nach Anspruch 8, wobei die Lenkungssteuerung erst dann eine Lenkbewegung einleitet, wenn die Abweichung zwischen einem Lenksollwert und einem Lenkistwert einen bestimmten Wert überschreitet oder ein Trend für eine weitere Veränderung des Lenksollwerts erkannt wird und/oder bis zum Überschreiten einer Mindestlenkgeschwindigkeit so schnell wie möglich beschleunigt, und/oder wobei die Lenkungssteuerung eine Lenkbewegung im Wege einer Vorsteuerung, welche das Auslaufverhalten des Antriebs berücksichtigt, punktgenau stoppt, und/oder ab dem Unterschreiten einer Mindestlenkgeschwindigkeit so schnell wie möglich abbremst.

10. Verfahren zum Betrieb eines Lenksystems nach einem der vorangegangenen Ansprüche, wobei Lenkbewegungen direkt durch Ansteuerung der Hydraulikpumpe erzeugt werden und/oder Lenkbewegungen unterhalb eines Mindestlenkbewegungswinkels und/oder unterhalb einer Mindestlenkbewegungsgeschwindigkeit unterdrückt werden.

11. Fahrzeug, insbesondere Nutzfahrzeug, Bus oder Anhänger mit einem Lenksystem nach einem der Ansprüche 1 bis 9, zur Lenkung einer hinteren Achse.

## Claims

1. Steering system having at least one steering cylinder for generating steering movements and at least one hydraulic pump for the provision of pressure for driving the steering cylinder,
wherein the hydraulic pump and the steering cylinder are connected to one another in such a way that the steering movements can be generated directly by controlling the hydraulic pump,
wherein the steering system is an auxiliary steering system or an additional steering system, which is used for the active steering of a rear axle, which is steered simultaneously with the main axle of a vehicle, wherein the control of the auxiliary steering is effected electronically through a steering control and a steering transducer is provided, which adopts the steering movement of the main axle, wherein a target steering value is calculated for the auxiliary axle on the basis of the signals of the steering transducer and controlled by activating the hydraulic pump.

2. Steering system according claim 1, wherein the hydraulic pump is driven by an electric motor, wherein the motor advantageously is a brushless or a brushed electric motor and/or the electric motor is controlled by means of a speed regulator through a DC voltage supply, wherein advantageously a DC voltage supply between 10 V and 50 V is used, in particular in 12 V, 24 V, 42 V or 48 V nominal.

3. Steering system according to claim 1 or 2, wherein the steering control generates steering signals for the generation of steering movements on the basis of the signals form the steering transducer, through which signals the supply rate and/or supply direction of the hydraulic pump is controlled, wherein the steering control advantageously controls the speed and/or rotational direction of an electric motor that drives the hydraulic pump.

4. Steering system according to one of the preceding claims, wherein the hydraulic pump is a bidirectional pump with a first and a second supply direction, wherein a steering movement in a first direction can be generated by operating the hydraulic pump in the first supply direction and a steering movement in a second direction can be generated by operating the hydraulic pump in the second supply direction, wherein advantageously a first and a second pressure chamber are provided, by the application with pressure of which a steering movement into the first or second direction, respectively, can be generated, wherein a first pressure port of the hydraulic pump is connected to the first pressure chamber and a second pressure port of the hydraulics pump is connected to the second pressure chamber.

5. Steering system according to one of claims 1 to 4, wherein the hydraulic cylinder is a synchronous cylinder, and wherein advantageously the two pressure ports of the hydraulic pump are directly connected to the two pressure chambers of the hydraulic cylinder, in particular without interposition of valves.

6. Steering system according to one of claims 1 to 4, wherein the hydraulic cylinder is a differential cylinder, and wherein advantageously the two pressure ports of the hydraulic pump are connected to the two pressure chambers of the hydraulic cylinder via a valve system, which establishes a connection to a hydraulics accumulator on the respective low pressure side.

7. Steering system according to one of claims 1 to 3 having a first and a second hydraulics pump, wherein a steering movement in a first direction can be generated by operating the first hydraulic pump and a steering movement in a second direction can be generated by operating the second hydraulic pump.

8. Steering system according to one of the preceding claims, wherein the steering control suppresses steering movements below a minimum steering movement angle and/or below a minimum steering movement velocity, whereby the steering control advantageously reduces the operation of the hydraulic pump with speeds lower than a minimum speed.

9. Steering system according to claim 8, wherein the steering control initiates a steering movement only when the deviation between a target steering value and an actual steering value exceeds a predetermined value or a trend for a further changing of the target steering angle is recognized and/or accelerates as fast as possible until exceeding a minimum steering velocity, and/or wherein the steering control considers a steering movement by means of a pre-steering, which considers the discontinuation behavior of the drive and stops punctually, and/or brakes as fast as possible once a minimum steering velocity is not reached.

10. A method of operating a steering system according to one of the preceding claims, wherein steering movements are generated directly by controlling the hydraulic pump and/or steering movements are suppressed below a minimum steering movement angle and/or below a minimum steering velocity.

11. Vehicle, in particular a utility vehicle, bus or trailer with a steering system according to one of claims 1 to 9 for steering of a rear axle.

## Revendications

1. Système de direction comprenant au moins un vérin de direction destiné à générer des mouvements de direction, et au moins une pompe hydraulique destinée à fournir une pression pour l'entraînement du vérin de direction,
la pompe hydraulique et le vérin de direction étant en liaison mutuelle de manière à ce que les mouvements de direction puissent être directement générés par commande de la pompe hydraulique,
le système de direction étant un système de direction auxiliaire ou un système de direction supplémentaire, lequel est utilisé pour la direction active d'un essieu arrière qui est dirigé en même temps avec l'essieu principal d'un véhicule automobile, la commande de la direction auxiliaire étant réalisée électroniquement par l'intermédiaire d'une commande de direction, et un générateur de direction étant prévu, lequel adopte le mouvement de direction de l'essieu principal, une valeur théorique de direction étant calculée pour l'axe auxiliaire sur la base des signaux du générateur de direction et commandée par commande de la pompe hydraulique.

2. Système de direction selon la revendication 1, la pompe hydraulique étant entraînée par un moteur électrique, de préférence par un moteur électrique sans balais ou un moteur électrique à balais, et/ou le moteur électrique étant commandé par l'intermédiaire d'une alimentation en tension continue au moyen d'un régulateur de vitesse, une alimentation en tension continue comprise entre 10 V et 50 V étant de préférence utilisée, notamment à hauteur de 12 V, 24 V, 42 V ou 48 V, tension nominale.

3. Système de direction selon la revendication 1 ou 2, la commande de direction générant des signaux de direction sur la base des signaux du générateur de direction dans le but de générer des mouvements de direction par l'intermédiaire desquels le débit et/ou le sens de refoulement de la pompe hydraulique sont commandés, la commande de direction commandant avantageusement la vitesse de rotation et/ou le sens de rotation d'un moteur électrique, lequel entraîne la pompe hydraulique.

4. Système de direction selon l'une quelconque des revendications précédentes, la pompe hydraulique étant une pompe bidirectionnelle ayant un premier et un deuxième sens de refoulement, un mouvement de direction dans un premier sens étant généré par le fonctionnement de la pompe hydraulique dans le premier sens de refoulement et un mouvement de direction dans un deuxième sens étant généré par le fonctionnement de la pompe hydraulique dans le deuxième sens de refoulement, une première et une deuxième chambres de pression étant avantageusement ménagées, par la mise sous pression respective desquelles un mouvement de direction dans le premier ou dans le deuxième sens peut être généré, un premier raccord de pression de la pompe hydraulique étant en liaison avec la première chambre de pression et un deuxième raccord de pression de la pompe hydraulique étant en liaison avec la deuxième chambre de pression.

5. Système de direction selon l'une quelconque des revendications 1 à 4, le vérin hydraulique étant un vérin synchrone et les deux raccords de pression de la pompe hydraulique étant avantageusement en liaison directe avec les deux chambres de pression du vérin hydraulique, notamment sans interposition de soupapes.

6. Système de direction selon l'une quelconque des revendications 1 à 4, le vérin hydraulique étant un vérin différentiel, et les deux raccords de pression de la pompe hydraulique étant avantageusement en liaison avec les deux chambres sous pression du vérin hydraulique par l'intermédiaire d'un système à soupape, lequel établit une liaison vers un accumulateur hydraulique sur le côté respectif de basse pression.

7. Système de direction selon l'une quelconque des revendications 1 à 3, comprenant une première et une deuxième pompes hydrauliques, un mouvement de direction dans un premier sens pouvant être généré par le fonctionnement de la première pompe hydraulique et un mouvement de direction dans un deuxième sens pouvant être généré par le fonctionnement de la deuxième pompe hydraulique.

8. Système de direction selon l'une quelconque des revendications précédentes, la commande de direction supprimant des mouvements de direction inférieurs à un angle de mouvement de direction minimal et/ou inférieurs à une vitesse de mouvement de direction minimale, sur quoi la commande de direction réduit avantageusement le fonctionnement de la pompe hydraulique par des vitesses de rotation inférieures à une vitesse de rotation minimale.

9. Système de direction selon la revendication 8, la commande de direction lançant un mouvement de direction seulement lorsque la déviation entre une valeur théorique de direction et une valeur réelle de direction dépasse une valeur déterminée ou lorsqu'une tendance vers une autre modification de la valeur théorique de direction est identifiée et/ou l'accélérant le plus rapidement possible jusqu'au dépassement d'une vitesse de direction minimale, et/ou la commande de direction stoppant ponctuellement un mouvement de direction par une commande pilote, laquelle tient compte du comportement de ralentissement de l'entraînement, et/ou le ralentissant le plus rapidement possible à partir du dépassement négatif d'une vitesse de direction minimale.

10. Procédé de fonctionnement d'un système de direction selon l'une quelconque des revendications précédentes, les mouvements de direction étant générés directement par commande de la pompe hydraulique, et/ou les mouvements de direction inférieurs à un angle de mouvement de direction minimal et/ou inférieurs à une vitesse de mouvement de direction minimale étant supprimés.

11. Véhicule automobile, notamment véhicule utilitaire, bus ou remorque, comprenant un système de direction selon l'une quelconque des revendications 1 à 9, destiné à la direction d'un essieu arrière.
